(19) Europäisches Patentamt
European Patent Office
Office européen des brevets

(11) Veröffentlichungsnummer: **0 363 487 A1**

(12) # EUROPÄISCHE PATENTANMELDUNG veröffentlicht nach Art. 158 Abs. 3 EPÜ

(21) Anmeldenummer: 88905468.0

(22) Anmeldetag: 17.03.88

(86) Internationale Anmeldenummer:
PCT/SU88/00061

(87) Internationale Veröffentlichungsnummer:
WO 89/08397 (21.09.89 89/23)

(51) Int. Cl.[5]: A01N 37/08 , A01N 31/14 , A01N 37/02

(43) Veröffentlichungstag der Anmeldung:
18.04.90 Patentblatt 90/16

(84) Benannte Vertragsstaaten:
CH DE FR GB IT LI

(71) Anmelder: VSESOJUZNY NAUCHNO-ISSLEDOVATELSKY INSTITUT SELSKOKHOZAISTVENNOI BIOTEKHNOLOGII VSESOJUZNOI AKADEMII SELSKOKHOZYAISTVENNYKH NAUK IMENI V.I. LENINA
ul. Pskovskaya 12-4 Moscow, 127253(SU)

Anmelder: INSTITUT FIZIKO-ORGANICHESKOI KHIMII AKADEMII NAUK BELORUSSKOI SSR
ul. Surganova, 13
Minsk, 220603(SU)

(72) Erfinder: FEDIN, Marat Alexandrovich
ul. Dm.Ulyanova, 24-158
Moscow, 107078(SU)
Erfinder: KUZNETSOVA, Tatyana Alexandrovna
Khoroshevskoe shosse, 36b-62
Moscow, 123007(SU)
Erfinder: LYSENKOV, Viktor Ivanovich
ul. Yakubova, 30-366
Minsk, 220101(SU)
Erfinder: TALAPIN, Vitaly Ivanovich
ul. Tikotskogo, 42-12
Minsk, 220119(SU)
Erfinder: NOVIKOVA, Svetlana Alexandrovna
ul. Shirokaya, 19-2-176
Moscow, 129224(SU)
Erfinder: POLOVINKIN, Leonid Vasilievich
ul. Zheleznodorozhnaya, 126b-2
Minsk, 220089(SU)
Erfinder: SAVCHUK, Valentin A.
Opytnaya stantsia VIR Globinsky raion
Poltavskaya obl. selo Ustimovka, 315967(SU)
Erfinder: PETROV, Anatoly Markovich
ul. Engelsa, 12-3
Minsk, 220030(SU)
Erfinder: SEDELNIKOV, Anatoly Ivanovich
ul. Turgeneva, 24b-54
Gorky, 603024(SU)
Erfinder: TIKHONOVA, Tatyana Sergeevna
ul. Aktjubinskaya, 3-5
Gorky, 603028(SU)
Erfinder: POLYAKOVA, Nina Petrovna
pl. Svobody, 4-85
Gorky, 603006(SU)
Erfinder: PAKLIN, Sergei Ivanovich
ul. Malaya Filevskaya, 66-30
Moscow, 121433(SU)

(74) Vertreter: von Füner, Alexander, Dr. et al
Patentanwälte v. Füner, Ebbinghaus, Finck
Mariahilfplatz 2 & 3
D-8000 München 90(DE)

(54) **Verfahren zur Sterilisation der Staubbeutel von.**

(57) Die vorliegende Erfindung bezieht sich auf die Landwirtschaft.

EP 0 363 487 A1

Das Verfahren zur Sterilisation der Staubbeutel von Pflanzen sieht die Behandlung der Pflanzen mit einem Sterilisationsmittel in Kombination mit einem Verdünner in der fünften und/oder sechsten Periode der Organogenese vor. Man verwendet als Sterilisationsmittel Terpenverbindungen der allgemeinen Formel:

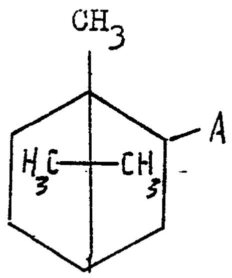

, worin A für Exo-$O\overset{O}{C}H$, Exo-$O\overset{O}{C}CF_3$, Exo-$O\overset{O}{C}Cl_3$, Exo-$O\overset{O}{C}CH_2Cl$, Exo-$O\overset{O}{C}CH_2Br$, Exo-$O\overset{O}{C}C(CH_3)_3$, Exo-$OCH_2CH_2Cl$, Exo-$OCH(CH_2Cl)_2$ Exo-OPh, Exo-, endo-$O\overset{O}{C}CH_3$ steht,

oder Gemische derselben.

Das erfindungsgemäße Verfahren findet in der Selektion und im Samenbau seine Verwendung.

EPAA-38390.4

# VERFAHREN ZUR STERILISATION DER STAUBBEUTEL VON PFLANZEN

## Anwendungsgebiet

Die vorliegende Erfindung bezieht sich auf die Biologie und Landwirtschaft, insbesondere auf ein Verfahren zur Sterilisation der Staubbeutel von Pflanzen, welches in der Selektion und im Samenbau zur Verwendung kommt.

## Zugrundeliegender Stand der Technik

Heute wird in der Welt die Aufgabe, die Landwirtschaft zu intensivieren, insbesondere die Ertragsfähigkeit von Getreide-, Futter-, Gemüse- und technischen Kulturen durch breite Verwendung von Hybriden der ersten Generation zu steigern, gelöst. Wegen ihrer Hybridkraft unterscheiden sich die Hybride von den Elternformten in einer höheren Leistung (um 25 bis 30 %) und einer besseren Produktqualität.

Es besteht ein Verfahren zur Erzeugung von neuen Hybriden, welches auf einem System "zytoplasmatische Pollensterilität - Restorer der Fertilität" beruht. Diesem Verfahren liegt eine fortwährende (innerhalb von 12 bis 14 Jahren) und komplizierte Selektionsarbeit zugrunde, die das Schaffen von sterilen Analoga, Fixatoren der Sterilität und Restorern der Fertilität umfaßt. Besonders aussichtsreich sind Verfahren, die auf der Sterilisation der Staubbeutel von Pflanzen mit chemischen Sterilisationsmitteln (Gametoziden) basieren. Die Verwendung von Gametoziden ist bedeutend wirtschaftlicher als die des Systems "zytoplasmatische Pollensterilität", weil die Notwendigkeit entfällt, solche Formen wie steriles Analogon, Analogon für die Fixierung der Sterilität bei mütterlichen Formen und für die Restauration der Fertilität bei väterlichen Formen zu entwickeln. Man kann praktisch die Samen von Hybriden der ersten Generation sowohl im Laufe der Selektionsforschung von Ausgangsformen als auch bei der Organisation ihrer großtechnischen Herstellung gewinnen.

Zur Zeit sind etwa 200 Verbindungen gefunden, welche eine gametozide Aktivität besitzen und ihrer chemischen Struktur nach zu verschiedenen Klassen von chemischen Verbindungen gehören. Gametozide müssen die volle Pollensterilität bei behandelten Pflanzen unter Erhaltung der Lebensfähigkeit von Eizellen bewirken und eine ausreichend hohe Fähigkeit (mindestens 70 % der Kontrolle), den Fruchtknoten unter freier Bestäubung zu bilden, sicherstellen. Die Werte ihrer Phytotoxizität und Toxizität für Warmblüter müssen minimal sein.

Bekannt sind Verfahren zur Sterilisation der Staubbeutel von Getreidekulturen (L. Dzh. Nikell. Regulatory rosta rasteny. Primenenie v selskom khosyaistve. Moskva, izdatelstvo "Kolos", 1984, S. 28-31; SU, A, 906457. L. J. Nikell. Wachstumsregulatoren von Pflanzen. Anwendung in der Landwirtschaft. Moskau, Verlag "Kolos", 1984, S. 28-31), welche in der Behandlung von Pflanzen mit Sterilisationsmitteln wie 2-Chloräthylphosphonsäure (Ethrel), Maleinsäurehydrazid, D-(polyfluoralkyl)-phosophorsäuren und ihre Salze u. a. bestehen. Die Behandlung der Pflanzen mit Sterilisationsmitteln erfolgt in der V. oder VI. Periode der Organogenese (nach F. M. Kupermann).

In der V. Periode der Organogenese setzen die Prozesse der Bildung und der Differenzierung von Blüten ein. Gegen Ende dieser Periode entstehen Neubildungen, sporogene Archesporgewebe. Während dieser Periode kommt es zur Anlegung von Staubblättern, Stempel und Blütenhülle. In der V. Periode tritt die Differenzierung des Höckers von Staubblättern in Staubfaden und Stempel in Erscheinung. Die VI. Periode ist durch Ablauf der Prozesse der Blütenbildung (Mikro- und Makrosporogenese) gekennzeichnet. In dieser Periode werden gesonderte einkernige Pollenkörner gebildet (F. M. Kupermann. Morfofiziologiya rasteny. Moskva, izdatelstvo "Vysshaya shkola", 1973, S. 30- 36. Morphophysiologie von Pflanzen, 1973, Verlag "Vysshaya shkola", Moskau, S. 30- 36).

Bekannt ist weiter ein Verfahren zur Sterilisation der Staubbeutel von Graspflanzen (GB, A, 1567153), das darin besteht, daß man die Behandlung von Graspflanzen mit einem Sterilisationsmittel in der Periode durchführt, die

zwischen Auftreten des zweiten Stengelglieds und Ähren-schieben liegt. Als Sterilisationsmittel verwendet man heterozyklische Verbindungen, deren Hauptvertreter 2-Karboxy-2,4-methanpyrrolidin oder 2-Methoxykarbonyl-3,4-methanpyrolidin sind. Die angegegebenen Verbindungen werden in Verbindung mit Verdünnungsmitteln und oberflächenaktiven Stoffen eingesetzt.

Offenbarung der Erfindung

Der Erfindung liegt die Aufgabe zugrunde, durch die Wahl von neuen Sterilisationsmitteln ein Verfahren zu entwickeln, welches zur Sterilisation der Staubbeutel eines breiten Spektrums von Kulturen mit hohem Sterilisationsgrad unter Erhaltung der hohen Fähigkeit von Samen, Fruchtansätze bei freier Bestäubung zu bilden, geeignet werden kann.

Diese Aufgabe wird dadurch gelöst, daß im vorgeschlagenen Verfahren zur Sterilisation der Staubbeutel von Pflanzen durch ihre Behandlung mit einem Sterilisationsmittel in Verbindung mit einem Verdünner in der fünften und/oder sechsten Periode der Organogenese erfindungsgemäß als Sterilisationsmittel Terpenverbindungen der allgemeinen Formel:

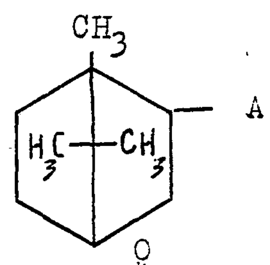

, worin

A für Exo - O - $\overset{O}{C}H$, Exo- $O\overset{O}{C}CF_3$, Exo- $O\overset{O}{C}CCl_3$, Exo -$O\overset{O}{C}CH_2Cl$,

Exo - $O\overset{O}{C}CH_2Br$, Exo - $O\overset{O}{C}C(CH_3)_3$

Exo - $OCH_2CH_2Cl$, Exo - $OCH(CH_2Cl)_2$, Exo - OPh,

Endo-exo-$O\overset{O}{C}CH_3$ steht, oder Gemische derselben bedeutet.

Das Sterilisationsmittel kann in Verbindung mit einem beliebigen bekannten und dazu geeigneten Verdünner verwen-

det werden. Es ist zweckmäßigerweise in Verbindung mit Wasser als 0,1- bis 2%ige wäßrige Emulsion zu verwenden. Als Pflanzen, die mit dem angegebenen Sterilisationsmittel behandelt werden, dienen bevorzugt Graspflanzen oder Sonnenblumen.

Das erfindungsgemäße Verfahren ermöglicht, die männliche Sterilität von Pflanzen (98--100 %) zu erzielen und eine hohe Fähigkeit zurm Fruchtansatz der Samen (über 70 %) zu erhalten. Zwecks Erzielung des hohen Sterilisationsgrades von Staubbeuteln unter ungünstigen Klimabedingungen wird die Behandlung von Pflanzen mit dem Sterilisationsmittel in der fünften und/oder sechsten Periode der Organogenese (nach Kupermann) wiederholt.

Beste Ausführungsvariante der Erfindung

Das erfindungsgemäße Verfahren wird wie folgt durchgeführt.

Pflanzen wie z. B. Winter- und Sommerweizen, diploider und tetraploider Roggen, Tritikale, Hirse, Sonnenblumen werden mit einem Sterilisationsmittel behandelt, wobei man als solches Terpenverbindungen der allgemeinen Formel

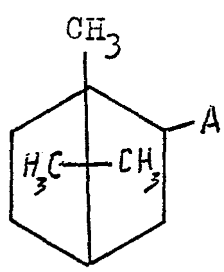

, worin A für Exo-$O\overset{O}{\overset{\|}{C}}H$ , Exo-$O\overset{O}{\overset{\|}{C}}CF_3$

Exo - $O\overset{O}{\overset{\|}{C}}CCl_3$, Exo - $O\overset{O}{\overset{\|}{C}}$ - $CH_2Cl$,

Exo - $O\overset{O}{\overset{\|}{C}}CH_2Br$, Exo - $O\overset{O}{\overset{\|}{C}}C(CH_3)_3$,

Exo - $OCH_2CH_2Cl$, Exo - $OCH(CH_2Cl)_2$,

Exo - OPh, Endo-exo - $O\underset{O}{C}CH_3$ steht,

oder Gemische derselben verwendet.

Terpenverbindungen können in Verbindung mit beliebigen geeigneten Verdünnern verwendet werden; als Verdünner ist Wasser zweckmäßiger zu benutzen. Dabei ist eine 0,1- bis 2%ige wäßrige Emulsion der genannten Verbindungen vorteilhaft zu verwenden.

Man kann den gebrauchsfertigen Lösungen beliebige ge-

eignete oberflächenaktive Stoffe wunschgemäß zusetzen. Beim Aufbringen auf die Pflanzen sind gewöhnlich den gebrauchsfertigen Lösungen beliebige bekannte Hilfszusätze wie Netzmittel, Dispergiermittel und Adhäsionsmittel zweckmäßigerweise hinzuzufügen.

Das Sterilisationsmittel läßt sich auf Pflanzen nach verschiedenen Behandlungsverfahren wie Flüssigkeitszerstäubung und Luftzerstäubung (Aerosole) aufbringen. Die Behandlung von Pflanzen mit dem Sterilisationsmittel erfolgt in der fünften und/oder sechsten Periode der Organogenese (nach Kupermann). Die Dosis des Sterilisationsmittels hängt von der Natur der Verbindung, von zu behandelnder Kultur, Behandlungsperiode und natürlichen Klimafaktoren ab. Um den hohen Sterilisationseffekt unter ungünstigen Klimabedingungen sicherzustellen, ist es zweckmäßig, die wiederholte Behandlung von Pflanzen in der VI. Periode der Organogenese durchzuführen. Die Gesamtdosis des Sterilisationsmittels beträgt von 0,6 bis 20 kg/ha.

Alle erfindungsgemäßen Terpenverbindungen, die als Sterilisationsmittel zur Verwendung kommen, waren auf die Toxizität im Tierversuch geprüft. Die Prüfergebnisse haben ergeben, daß die angegebenen Verbindungen von schwacher Toxizität sind oder praktisch untoxische Verbindungen darstellen. So beträgt beispielsweise $LD_{50}$ bei 2-Exo-bornylmonochlorazetat für weiße Mäuse 480 mg/kg Tiergewicht, bei 2-Exo-(2-chloräthoxy)-bornan beträgt $LD_{50}$ 2130 mg/kg Tiergewicht, bei 2-Exo-bornyl-trifluorazetat beträgt 2700 mg/kg Tiergewicht, $LD_{50}$ bei 2-Exo-bornyltrichlorazetat 3040 mg/kg, $LD_{50}$ bei 2-Exo-phenoxybornan 3500 mg/kg, $LD_{50}$ bei 2-Exo-bornylformiat beträgt für Ratten 5000 mg/kg Tiergewicht, $LD_{50}$ bei 2-Exo-bornyltrimethylazetat für Ratten beträgt 3000 mg/kg Tiergewicht und $LD_{50}$ bei 2-Endo-bornylazetat beträgt für Ratten 5000-10000 mg/kg Tiergewicht.

Die erfindungsgemäße Sterilisationsmittel erhält man nach der bekannten Methodik bei der Umsetzung von Kamphen mit elektrophilen Mitteln (mit niederen Karbonsäurehalogeniden bzw. Karbonsäurealkylhalogeniden bzw. Alkoholen)

in einem saueren Medium bei einer Temperatur von 30 bis 100°C.

Die gemetozide Aktivität der erfindungsgemäßen Sterilisationsmittel war in Feldversuch in verschiedenen bodenklimatischen Zonen mit Teilstücken von 10 $m^2$ Größe in zwei- bis drei- bis viermaliger Wiederholung festgestellt. Jedes Sterilisationsmittel wurde mindestens 5 Jahre lang geprüft.

Die Entwicklung der Perioden der Organogenese wird zytologisch überwacht. Die Behandlung von Pflanzen mit dem Sterilisationsmittel erfolgt am Anfang der fünften Periode der Organogenese nach Kupermann.

Mit dem Ährenschieben verwirklicht man die Isolierung von Hauptähren und anderen Stockwerken in Pergamentbeuteln. Bei Weizen und Tritikale werden Einzelisolatoren verwendet. Bei Roggen schließt man je Ähre von 5 bis 7 verschiedenen nebeneinander befindlichen Pflanzen unter einen gemeinsamen Isolator ein. Bei Hirse wird jede Rispe getrennt isoliert. Der Sterilitätsprozentsatz (x) für Weizen, Roggen, Tritikale und Hirse wird nach der Formel

$$x = \left(I - \frac{\text{Anzahl der in einem Isolator befruchteten Samen von behandelten Pflanzen}}{\text{Anzahl der unter einem Isolator befruchteten Samen von unbehandelten Kontrollpflanzen}}\right) x\ 100\%$$

ermittelt.

Die Kornzahl in nicht isolierten Ähren von Kontrollpflanzen wird bedingt für 100 % Ansetzen bei freier Bestäubung angenommen.

Um zuverlässige Angaben zu erhalten, verwendet man 20 bis 25 Isolatoren jeder Wiederholung für Weizen und Tritikale, 10 bis 15 Isolatoren jeder Wiederholung für Roggen und Hirse.

Zur Kontrolle der chemischen Sterilisation des Sonnenblumenpollens werden für jede Verbindung 45 behandelte Pflanzen jeder Wiederholung benutzt, wobei 15 Pflanzen zwecks Selbstbestäubung des Blütenkörbchens isoliert werden, 15 Pflanzen mit einem Pollengemisch, gesammelt von

20 bis 25 behandelten isolierten Körbchen, bestäubt werden, und 15 Pflanzen für freie Bestäubung gelassen werden, damit das Ansetzen von Achänen mit dem Pollen der Vaterform kontrolliert worden kann.

Man beurteilt die Pollensterilität von Pflanzen der Sonnenblume nach der Pollenfertilität und -keimfähigkeit, nach dem morphologischen Besonderheiten von Spermien und nach der Fähigkeit von Achänen zum Ansetzen bei der Bestäubung der behandelten isolierten Pflanzen mit dem Pollen der unbehandelten väterlichen Form. Die Lebensfähigkeit der Eizelle wird nach der Samenbildung bei behandelten Pflanzen bei freier Bestäubung der väterlichen Form bestimmt.

Es ist wünschenswert, die Behandlung von Pflanzen bei heiterem windstillem Wetter durchzuführen. Alle Verbindungen dringen in Gewebe der Pflanzen innerhalb von 4 Stunden durch. Im Falle der Niederschläge während dieser 4 Stunden ist es notwendig, Pflanzen in der VI. Periode der Organogenese wiederholt zu behandeln.

Zum besseren Verständnis der vorliegenden Erfindung werden folgende Ausführungsvarianten des erfindungsgemäßen Verfahrens angeführt.

Beispiel 1

Pflanzen des Winterweizens Sorte Mironovskaya 808 werden in der V. Periode der Organogenese durch Zerstäubung einer 2%igen wäßrigen Emulsion von 2-Exo-bornylbromazetat mit Hilfe einer Rückenspritze behandelt. Man fügt als Emulgator 0,1 Masse-% $C_{12}$-$C_{14}$ Kalziumalkylbenzolsulfonat hinzu. Als Adjuvans führt man in die Emulsion 0,01 Masse% Dimethylsulfoxid ein. Der Verbrauch an Präparat beträgt 12 kg/ha. Als Kontrolle dienen Pflanzen, behandelt mit einem Verdünner ohne Sterilisationsmittel. Die Ergebnisse der Prüfungen sind in der Tabelle 1 angegeben. Die analogen Ergebnisse sind bei der Behandlung der Pflanzen in der VI. Periode der Organogenese erhalten.

Beispiele 2- 3

Man verfährt analog dem Beispiel 1. Als Sterilisationsmittel benutzt man eine 2%ige wäßrige Emulsion von 2-Exo-

bornyl-trifluorazetat und 2-Exo-bornyl-trichlorazetat. Die Prüfergebnisse sind in der Tabelle 1 angegeben.

Beispiele 4- 7

Der Prozeß wird analog zu dem in Beispiel 1 beschriebenen durchgeführt, mit dem Unterschied aber, daß man eine 0,5 massenprozentige wäßrige Emulsion von 2-Exo-2-chloräthoxybornan, 2- Exo-bornylmonochlorazetat, 2-Exobornylformiat bzw. 2-Exo-bornylazetat verwendet. Der Verbrauch an Präparat beträgt 3 kg/ha. Die Prüfergebnisse sind in der Tabelle 1 angeführt.

Beispiel 8- 9

Der Prozeß wird analog zu dem in Beispiel 1 beschriebenen durchgeführt, mit dem Unterschied aber, daß man eine 1%ige wäßrige Emulsion von 2-Exo-phenoxybornan und 2-Exo-(2-chlor-I-chlormethyläthoxy)bornan verwendet. Der Verbrauch an Präparat beträgt 6 und 10 kg/ha. Die Prüfergebnisse sind in der Tabelle 1 angeführt.

Tabelle 1

| lfd. Nr. | Beispiel Nr. | Kornzahl der Ähre im Isolator | Prozentsatz der Sterilität | Kornzahl der Ähre bei freier Bestäubung | Prozentsatz des Ansetzens von Körnern bei freier Bestäubung |
|---|---|---|---|---|---|
| 1 | 2 | 3 | 4 | 5 | 6 |
| 1 | Kontrolle | 34,5 | 0,0 | 40,5 | 100,0 |
| 2 | Beispiel 1 | 0,0 | 100,0 | 38,2 | 94,3 |
| 3 | Beispiel 2 | 0,0 | 100,0 | 28,1 | 69,4 |
| 4 | Beispiel 3 | 0,0 | 100,0 | 28,3 | 69,9 |
| 5 | Beispiel 4 | 0,5 | 98,6 | 32,3 | 79,7 |
| 6 | Beispiel 5 | 0,5 | 98,6 | 31,4 | 77,5 |
| 7 | Beispiel 6 | 0,2 | 99,4 | 33,4 | 83,2 |
| 8 | Beispiel 7 | 0,0 | 100,0 | 31,7 | 78,3 |
| 9 | Beispiel 8 | 0,0 | 100,0 | 38,9 | 96,0 |
| 10 | Beispiel 9 | 0,0 | 100,0 | 36,1 | 89,1 |

Beispiele 10- 16

Pflanzen des Sommerweizens Moskovskaya 35 werden in der VI. Periode der Organogenese (nach Kupermann) mit einer 1%igen wäßrigen Emulsion von 2-Exo-bornylmonochlorazetat, 2-Exo-bornylmonobromazetat, 2-Exo-bornyltrifluorazetat, 2-Exo-bornylazetat, 2-Exo-(2-chloräthoxy)-bornan, 2-Exo-bornylformiat bzw. 2-Endo-bornylazetat behandelt. Die Emulsion enthält als Emulgiermittel 0,1 Masse% $C_{12}$-$C_{14}$-Kalzium-alkylbenzolsulfonat und als Adjuvans 0,01 Masse% N,N-Dimethylformamid. Der Verbrauch an Präparat beträgt 6 kg/ha. Als Kontrolle dienen Pflanzen, behandelt mit dem Verdünner ohne Sterilisationsmittel. Die Prüfergebnisse sind in der Tabelle 2 angeführt. Die analogen Ergebnisse sind bei der Behandlung der Pflanzen in der V. Periode der Organogenese erhalten.

Tabelle

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 34,9 | - | 36,4 | 100,0 |
| 2 | Beispiel 10 | 0,0 | 100,0 | 22,1 | 60,7 |
| 3 | Beispiel 11 | 0,0 | 100,0 | 22,7 | 62,4 |
| 4 | Beispiel 12 | 0,0 | 100,0 | 30,4 | 83,5 |
| 5 | Beispiel 13 | 0,1 | 99,7 | 20,9 | 57,4 |
| 6 | Beispiel 14 | 0,0 | 100,0 | 22,6 | 62,1 |
| 7 | Beispiel 15 | 0,0 | 100,0 | 27,5 | 75,5 |
| 8 | Beispiel 16 | 0,2 | 99,4 | 35,6 | 97,8 |

Beispiele 17- 23

Pflanzen von diploidem Roggen Sorte Chulpan werden in der VI. Periode der Organogenese (nach Kupermann) mit einer 1%igen wäßrigen Emulsion von 2-Exo-bornylmonochlorazetat, 2-Exo-bornylmonobromazetat, 2-Exo-bornyltrichlorazetat, 2-Exo-phenoxybornan, 2-Exo-2-chlor-I-chlormethyläthoxy)bornan bzw. 2-Endo-bornylazetat behandelt. Die Emulsion enthält 0,1 Masse% $C_{12}$-$C_{14}$-Kalziumalkylbenzolsulfonat und 0,01 Masse% Dodezylsulfat. Der Verbrauch an Präparat beträgt 6 kg/ha. Als Kontrolle dienen Pflanzen, behandelt mit einem Verdünner ohne Sterilisationsmittel.

Die Prüfergebnisse sind in der Tabelle 3 angeführt. Die analogen Ergebnisse sind bei der Behandlung der Pflanzen in der V. Periode der Organogenese erhalten.

Tabelle 3

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 49,2 | - | 54,1 | 100,0 |
| 2 | Beispiel 17 | 0,7 | 98,7 | 46,2 | 85,4 |
| 3 | Beispiel 18 | 0,6 | 98,9 | 38,6 | 71,3 |
| 4 | Beispiel 19 | 0,0 | 100 | 38,1 | 70,4 |
| 5 | Beispiel 20 | 0,3 | 99,4 | 52,3 | 96,7 |
| 6 | Beispiel 21 | 0,5 | 99,1 | 53,5 | 98,9 |
| 7 | Beispiel 22 | 0,0 | 100 | 53,6 | 99,1 |
| 8 | Beispiel 23 | 0,4 | 99,3 | 49,0 | 90,6 |

Beispiel 24--26

Pflanzen von tetraploidem Roggen Sorte Belta werden in der V. Periode der Organogenese (nach Kupermann) mit einer 1%igen wäßrigen Emulsion folgender Sterilisationsmittel: 2-Exo-bornyl-(trifluor)-azetat, 2-Exo-bornyl-(trichlor)azetat, 2-Exo-phenoxybornan behandelt. Der Verbrauch an Sterilisationsmittel beträgt 10 kg/ha.

Die Ergebnisse der durchgeführten Prüfungen im Vergleich mit Kontrolle sind in der Tabelle 4 angeführt.

Tabelle 4

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 39,9 | 0,0 | 44,2 | 100,0 |
| 2 | Beispiel 24 | 0,0 | 100 | 38,1 | 86,2 |
| 3 | Beispiel 25 | 0,0 | 100 | 36,0 | 81,4 |
| 4 | Beispiel 26 | 0,0 | 100 | 39,2 | 88,6 |

Beispiel 27

Pflanzen von diploidem Roggen Charkovskaya 55 werden analog dem Beispiel 1 in der V. und VI. Periode der Organogenese mit 1,0%iger wäßriger Emulsion von 2-Exo-phenoxybornan behandelt. Der Verbrauch an Sterilisationsmittel beträgt 6 kg/ha. Die Prüfergebnisse sind in der Tabelle 5 dargestellt.

Tabelle 5

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 31,5 | 0 | 39,4 | 100,0 |
| 2 | Beispiel 27 | 0 | 100 | 34,3 | 87,0 |

Beispiel 28

Pflanzen von Tritikale Sorte PRAG-109 werden analog dem Beispiel 1 mit einer 2%igen wäßrigen Emulsion von 2-Exp-Phenoxyvornan in der V. Periode der Organogenese behandelt. Der Verbrauch an Sterilisationsmittel beträgt 12 kg/ha. Die Prüfergebnisse sind in der Tabelle 6 angeführt.

Tabelle 6

| lfd. Nr. | Beispiele Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 41,3 | 0,0 | 45,8 | 100,0 |
| 2 | Beispiel 28 | 0,3 | 99,3 | 39,7 | 86,7 |

Beispiel 29

Pflanzen von Tritikale Sorte Amfidiploid 206 werden analog dem Beispiel 1 in der V. Periode der Organogenese mit einer 2%igen wäßrigen Emulsion von 2-Exophenoxybornan behandelt. Der Verbrauch an Sterilisationsmittel beträgt 12 kg/ha. Die Ergebnisse der durchgeführten Prüfungen sind in der Tabelle 7 angeführt.

Tabelle 7

| lfd. Nr. | Beispiele Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 23,4 | 0,0 | 25,2 | 100 |
| 2 | Beispiel 29 | 0,2 | 98,9 | 25,2 | 100,0 |

Beispiele 30--39

Pflanzen der Hirse Sorte Mironovskoe 94 werden analog dem Beispiel 1 in der V. Periode der Organogenese mit einer 1%igen wäßrigen Emulsion folgender Sterilisationsmittel: 2-Exo-bornyl-(trifluor)-azetat, 2-Exo-phenoxybornan, 2-Exo-(2-chlor-I-chlor-methyläthoxy)-bornan, 2-Exo-bornyl-trimethylazetat, 2-Endo-bornylazetat, 2-Exo-bornyl-monochlorazetat, 2-Exo-bornyl-monobromazetat, 2-Exo-bornyl-(trichlor)azetat, 2-Exo-bornylazetat, 2-Exo-(2-chloräthoxy) bornan, bzw. 2-Exo-bornylformiat behandelt.

Der Verbrauch an Sterilisationsmittel beträgt 10 kg/ha. Die Prüfergebnisse im Vergleich mit Kontrolle sind in der Tabelle 8 dargestellt.

Tabelle 8

| lfd. Nr. | Beispiel Nr. | Kornzahl der Rispe im Isolator | Prozentsatz der Sterilität | Kornzahl der Rispe bei freier Bestäubung | Prozentsatz des Ansetzens der Rispe bei freier Bestäubung |
|---|---|---|---|---|---|
| 1 | 2 | 3 | 4 | 5 | 6 |
| 1 | Kontrolle | 105,1 | 0,0 | 153,3 | 100,0 |
| 2 | Beispiel 30 | 0,0 | 100,0 | 123,6 | 80,6 |
| 3 | Beispiel 31 | 0,0 | 100,0 | 130,0 | 84,8 |
| 4 | Beispiel 32 | 0,0 | 100,0 | 90,2 | 58,8 |
| 5 | Beispiel 33 | 0,0 | 100,0 | 101,2 | 66,0 |
| 6 | Beispiel 34 | 0,0 | 100,0 | 105,2 | 68,6 |
| 7 | Beispiel 35 | 0,0 | 100,0 | 128,5 | 83,8 |
| 8 | Beispiel 36 | 0,0 | 100,0 | 128,4 | 83,8 |
| 9 | Beispiel 37 | 0,0 | 100,0 | 136,9 | 89,3 |
| 10 | Beispiel 38 | 0,0 | 100,0 | 98,7 | 64,4 |
| 11 | Beispiel 39 | 0,0 | 100,0 | 135,7 | 88,5 |

Beispiel 40- 45

Pflanzen der Sonnenblume Sorte Peredovik und Linie BK 119 werden analog dem Beispiel 1 mit einer 0,2%igen wäßrigen Emulsion folgender Sterilisationsmittel: 2-Exo-bornylazetat, 2-Exo-bornylformiat, 2-Exo-phenoxybornan, 2-Exo-bornylmonochlorazetat, 2-Exo-(2-chloräthoxy)bornan bzw. 2-Exo-bornyltrichlorazetat behandelt. Die Behandlung führt man in der V. Periode der Organogenese in die Phase "Sternchen" durchgeführt. Die Präparatdosis beträgt 1,2 kg/ha. Die Prüfergebnisse sind in der Tabelle 9 angeführt.

Tabelle 9

| lfd. Nr. | Beispiel Nr. | Prozentsatz des Ansetzens von Achänen im Isolator bei Pollengemischbestäubung | Prozentsatz des Ansetzens bei freier Bestäubung | Masse von 1000 Achänen, in g | Anzahl der sterilen Pflanzen in % | Ölgehalt von Achänen, in g | Keimung von Achänen in % |
|---|---|---|---|---|---|---|---|
| 1 | 2 | 3 | 4 | 5 | 6 | 7 | 8 |
| | | Sonnenblume Sorte Peredovik | | | | | |
| 1 | Kontrolle | 85,0 | 85,0 | 84,0 | 0,0 | 54,7 | 100,0 |
| 2 | Beispiel 40 | 0,0 | 68,3 | 78,0 | 100,0 | 54,5 | 100,0 |
| 3 | Beispiel 41 | 0,0 | 85,4 | 82,7 | 100,0 | 51,4 | 100,0 |
| 4 | Beispiel 42 | 0,0 | 79,8 | 89,0 | 100,0 | 53,9 | 100,0 |
| | | Sonnenblume Linie VK 119 | | | | | |
| 5 | Kontrolle | 72,6 | 85,0 | 60,0 | 0,0 | 51,0 | 100,0 |
| 6. | Beispiel 43 | 0,0 | 77,4 | 55,8 | 100,0 | 50,3 | 100,0 |
| 7 | Beispiel 44 | 0,0 | 88,2 | 59,5 | 100,0 | 50,3 | 100,0 |
| 8 | Beispiel 45 | 0,0 | 83,5 | 56,0 | 100,0 | 50,1 | 100,0 |

Beispiel 46

Pflanzen des Sommerweizens Sorte Botanicheskaya 4 werden analog dem Beispiel 1 mit einer 1%igen wäßrigen Emulsion eines Gemisches aus Sterilisierungsmitteln wie 2-Exo-bornylmonochlorazetat mit 2-Endo-bornylazetat, genommen in einem Verhältnis 1:1, behandelt. Die Prüfergebnisse sind in der Tabelle 10 angeführt.

Tabelle 10

| lfd. Nr. | Behandlung der Pflanzen | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 28,9 | 0,0 | 30,9 | 100,0 |
| 2 | Gemisch aus Sterilisierungsmitteln | 0,0 | 100,0 | 29,0 | 93,8 |

Beispiele 47- 49

Pflanzen von diploidem Roggen Sorte Chulpan werden analog dem Beispiel 1 mit einer 1%igen wäßrigen Emulsion folgender Gemische von Sterilisierungsmitteln wie Gemisch aus 2-Exo-bornyltrichlorazetat mit 2-Endo-bornylazetat (bei einem Verhältnis 1:1), Gemisch aus 2-Exo-bornylazetat mit 2-Exo-bornyltrimethylazetat (bei einem Verhältnis 1:1), Gemisch aus 2-Exo-bornylformiat mit 2-Exo-phenoxybornan (bei einem Verhältnis 1:1) behandelt.

Tabelle 11

| lfd. Nr. | Beispiel Nr. | Kornzahl der Ähre im Isolator | Prozentsatz der Sterilität | Kornzahl der Ähre bei freier Bestäubung | Prozentsatz des Ansetzens der Körner bei freier Bestäubung |
|---|---|---|---|---|---|
| 1 | 2 | 3 | 4 | 5 | 6 |
| 1 | Kontrolle | 44,5 | 0,0 | 46,6 | 100,0 |
| 2 | Beispiel 47 | 0,0 | 100,0 | 40,5 | 86,9 |
| 3 | Beispiel 48 | 0,0 | 100,0 | 36,4 | 78,1 |
| 4 | Beispiel 49 | 0,0 | 100,0 | 38,8 | 83,3 |

## Industrielle Verwendbarkeit

Das erfindungsgemäße Verfahren findet seine Anwendung in der Selektion und im Samenbau zur Erhaltung von hochproduktiven Sorten und Hybriden der landwirtschaftlichen Kulturen.

## PATENTANSPRÜCHE:

1. Verfahren zur Sterlisation der Staubbeutel von Pflanzen durch ihre Behandlung mit einem Sterilisationsmittel in Verbindung mit einem Verdünner in der fünften und/oder sechsten Periode der Organogenese, dadurch g e k e n n z e i c h n e t , daß man als Sterilisationsmittel Terpenverbindungen der allgemeinen Formel:

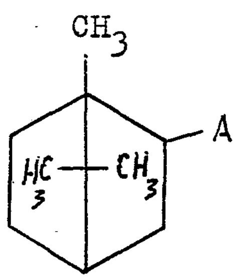

worin A für Exo- $O\overset{O}{C}H$, Exo-$O\overset{O}{C}CF_3$, Exo-$OCCl_3$,

Exo-$O\overset{O}{\overset{\|}{C}}CH_2Cl$, Exo-$O\overset{O}{\overset{\|}{C}}CH_2Br$,

Exo-$O\overset{O}{C}C(CH_3)_3$, Exo-$OCH_2CH_2Cl$

Exo-$OCH(CH_2Cl)_2$ , Exo - ØPh,

Endo-,exo-$O\overset{O}{C}CH_3$ steht,

oder Gemische derselben verwendet.

2. Verfahren nach Anspruch 1, dadurch g e k e n n z e i c h n e t , daß die angegebenen Terpenverbindungen in Verbindung mit einem Verdünner und zwar Wasser in Form einer 0,1%igen wäßrigen Emulsion verwendet werden.

3. Verfahren nach Anspruch 1- 2, dadurch g e k e n n z e i c h n e t , daß als mit dem Sterilisationsmittel zu behandelnde Pflanzen Gräser oder Sonnenblumen verwendet werden.

4. Verfahren nach Anspruch 1 bis 3, dadurch g e k e n n z e i c h n e t , daß man zur Erzielung eines hohen Sterilisationsgrades von Staubbeuteln unter ungünstigen klimatischen Bedingungen eine wiederholte Behandlung von Pflanzen mit dem Sterilisationsmittel in der fünften und/ oder sechsten Periode der Organogenese verwirklicht.

# INTERNATIONAL SEARCH REPORT

International Application No PCT/SU 88/00061

**I. CLASSIFICATION OF SUBJECT MATTER** (if several classification symbols apply, indicate all) [6]

According to International Patent Classification (IPC) or to both National Classification and IPC

$IPC^4$ A01N 37/08, 31/14, 37/02

**II. FIELDS SEARCHED**

Minimum Documentation Searched [7]

| Classification System | Classification Symbols |
|---|---|
| $IPC^4$ | A01N 37/08, 37/02, 31/14<br>A01H 1/04 |

Documentation Searched other than Minimum Documentation to the Extent that such Documents are Included in the Fields Searched [8]

**III. DOCUMENTS CONSIDERED TO BE RELEVANT** [9]

| Category * | Citation of Document, [11] with indication, where appropriate, of the relevant passages [12] | Relevant to Claim No. [13] |
|---|---|---|
| A | EP, A3, 0133155 (CIBA-GEIGY AG) 13 February 1985 (13.02.85) see pages 35,36,37,43 | 1 |
| A | GB, A, 2140003 (Shell Internationale Research Maatschappij BV) 21 November 1984 (21.11.84) | 1,3 |
| A | Selektsia i semenovodstvo, Nr. 4, 1982 (Kolos, Moscow), P.V. Chiryaev " Industsirovanie muzhskoi sterilnosti u podsolnechnika rastvorami" gibberellina" pages 43,44 | 1,3 |
| A | SU, A1, 635926 (Vsesojuzny ordena Lenina i ordena Druzhby narodov nauchno-issledovatelsky institut rastenievodstva im N.N. Vavilova et al.) 10 December 1978 (10.12.78) ./. | 1-4 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 11 October 1988 (11.10.88) | 16 December 1988 (16.12.88) |
| **International Searching Authority** | **Signature of Authorized Officer** |
| ISA/SU | |

International Application No. PCT/SU 88/00061

| III. DOCUMENTS CONSIDERED TO BE RELEVANT (CONTINUED FROM THE SECOND SHEET) | | |
|---|---|---|
| Category * | Citation of Document, with indication, where appropriate, of the relevant passages | Relevant to Claim No |
| A | SU, A1, 640711 (Vsesojuzny ordena Lenina i ordena Druzhby narodov nauchno-issledovatelsky institut rastenievodstva im N.N. Vavilova et al.) 08 January 1979 (08.01.79) | 1-4 |
| A | GB, A, 2102782 (Ciba-Geigy AG) 09 February 1983 (09.02.83) see pages 1, 12-16 | 1 |